# FASCICULE DE BREVET EUROPEEN

(11) **EP 1 177 597 B1**
(45) Date de publication et mention de la délivrance du brevet: **09.07.2003**
(21) Numéro de dépôt: 00918651.1
(22) Date de dépôt: 03.05.2000
(51) Int. Cl.: H01Q 1/22, H01Q 21/28, H01Q 21/29

(54) **CARTE A PUCE COMPORTANT UNE ANTENNE**
CHIPKARTE MIT ANTENNE
CHIP CARD COMPRISING AN ANTENNA

(30) Priorité: 07.05.1999 CH 86799
(43) Date de publication de la demande: 06.02.2002
(73) Titulaire: NJC Innovations, 1110 Morges (CH)
(72) Inventeur: BERNEY, Jean-Claude, CH-1110 Morges (CH)
(74) Mandataire: Gresset, Jean
(86) Numéro de dépôt international: CH0000242
(87) Numéro de publication internationale: WO00069016

(56) Documents cités:
- EP-A- 0 762 535
- US-A- 4 155 091

## Description

La présente invention concerne une carte à puce sans contact, de type RF (radio-fréquence).

De nombreuses exécutions de ce genre de carte sont disponibles sur le marché. Elles comportent généralement un module électronique comprenant une bobine captrice associée à un circuit intégré, cette bobine permettant, d'une part, de transmettre les signaux RF et, d'autre part, de fournir l'énergie nécessaire au fonctionnement du module électronique. Les documents US 4 155 091 et EP 762 535 décrivent des exemples de telles réalisations.

Les cartes les plus simples comportent uniquement un code que l'on peut lire à distance, mais on trouve également de plus en plus de cartes à puce à lecture/écriture comportant une mémoire de type EEPROM capable de sauvegarder son information même en absence de source d'alimentation. L'écriture dans ces mémoires demande une énergie relativement importante qu'il est nécessaire de prélever aux bornes de la bobine captrice. Or cela peut poser des problèmes, particulièrement dans les systèmes d'accès "main libre" qui représentent l'une des applications majeures de telles cartes.

Une solution pour obtenir l'énergie nécessaire au fonctionnement de la carte à la plus grande distance possible est d'utiliser une bobine de grande surface permettant de capter un maximum de flux. Ainsi, les bobines rondes ont souvent un diamètre proche de la largeur de la carte et, dans certains cas, on utilise même des bobines rectangulaires qui couvrent pratiquement l'entier de la surface de celle-ci. Une autre possibilité consiste à intégrer dans la carte des antennes en matériau à perméabilité élevée pour concentrer le flux passant à proximité de la carte au centre de la bobine captrice. Le document WO 98/52141 décrit un tel système qui permet d'obtenir avec des bobines de petit diamètre des performances équivalentes à celles de bobines de grand diamètre.

Cependant, il subsiste un problème majeur. En effet, dans les deux cas mentionnés, le flux maximum dans la bobine n'est obtenu que lorsque la carte a une orientation bien définie par rapport aux lignes de flux générées par le lecteur. Lorsqu' on modifie la position de la carte, le flux diminue rapidement et il y a même de nombreuses positions mortes où le flux dans la bobine est tout simplement nul ou, tout au moins, proche de zéro. Cela pose évidemment de graves problèmes, particulièrement dans le cadre des applications "main libre" car la position de la carte relativement aux lignes de flux générées par le lecteur peut être très variable selon le porteur et l'endroit où il a rangé sa carte.

La présente invention a précisément pour but de fournir une combinaison bobine captrice/antenne permettant de résoudre en grande partie le problème évoqué ci-dessus en rendant la quantité de flux capté par la bobine beaucoup plus indépendant de la position entre la carte et les lignes de flux générées par le lecteur.

De manière plus précise, l'invention concerne une carte à puce sans contact, de type RF, comportant une bobine captrice, un circuit électronique relié à la bobine et des éléments en matériau de perméabilité magnétique élevée faisant office d'antenne, comportent une première partie située sensiblement dans le plan de la face supérieure de la bobine et une deuxième partie située sensiblement dans le plan de la face inférieure de la bobine. Elle est caractérisée par le fait que l'antenne comporte une partie de liaison entre la première et la deuxième partie, positionnée au centre de la bobine, cette dernière étant dimensionnée par rapport à l'antenne de manière que les tensions induites à ses bornes soient du même ordre de grandeur, que l'antenne soit parallèle ou perpendiculaire aux lignes de flux magnétique générées par un dispositif de lecture.

L'invention sera mieux comprise à la lecture de la description qui va suivre, donnée à titre explicatif et faite en regard des dessins annexés sur lesquels:
- les figures 1 a, b et c représentent quelques formes d'exécution d'une carte à puce selon l'invention avec son antenne et sa bobine captrice;
- les figures 2 a, b et c représentent la tension aux bornes de la bobine captrice en fonction de la position de celle-ci dans le flux pour une première forme d'antenne; et
- les figures 3 a, b et c représentent la tension aux bornes de la bobine captrice en fonction de la position de celle-ci dans le flux pour une deuxième forme d'antenne.

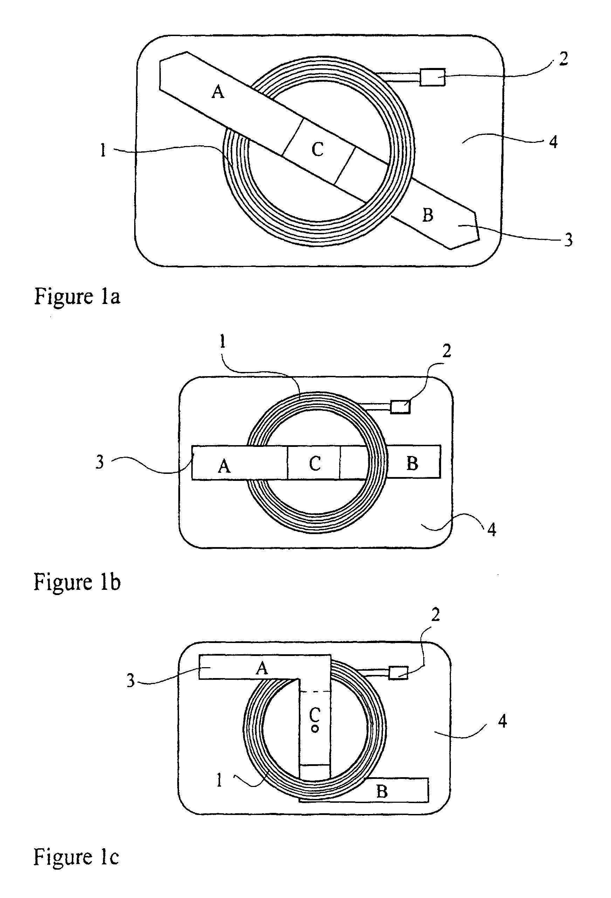

On se référera tout d'abord à la figure 1 qui représente schématiquement une carte à puce selon l'invention, au format carte de crédit. Il s'agit là du format le plus courant, mais l'invention est, bien sur, applicable à des cartes à puce et autres étiquettes électroniques de dimensions très variées.

La carte à puce représentée comporte une bobine captrice 1 reliée à un circuit électronique 2 comportant une mémoire et des moyens de transmission RF à 125 kHz, fréquence très généralement utilisée dans ce type d'application. Ce type de circuit, bien connu de l'homme de métier, peut être, par exemple, l'un des circuits commercialisés par la société EM Marin (CH) sous les références H 4000, 4001 à 4005 et 4050.

La bobine 1 est traversée par une antenne 3 en matériau à haute perméabilité magnétique. Cette antenne doit être très mince et avoir une forme particulière. Ainsi, elle peut être réalisée dans un ruban ou une feuille de métal à forte teneur en nickel comme le Mumétall® ou le Permalloy® qui sont réputés avoir une perméabilité magnétique très élevée. On trouve sur le marché des feuilles de 100 microns d'épaisseur, voire de 50 microns. Cette faible épaisseur est nécessaire, d'une part, pour ne pas augmenter de manière significative l'épaisseur de la carte et, d'autre part, pour réduire les pertes par courant de Foucault dans l'antenne. Une autre possibilité pour diminuer encore ces pertes consiste à réaliser l'antenne dans un empilage de feuilles encore plus minces, par exempte 10 ou 20 microns, isolées électriquement entre elles comme les tôles d'un transformateur.

L'ensemble bobine 1, circuit 2 et antenne 3 est incorporé dans l'épaisseur du corps de la carte 4, par exemple par surmoulage de matière plastique.

L'antenne 3 comporte 3 zones, la zone A qui est dans le plan de la face supérieure de la bobine, la zone B qui est dans le plan de sa face inférieure et la zone C qui est une zone de liaison entre les zones A et B. La surépaisseur due à l'antenne se limite aux épaisseurs des zones A et B qui sont superposées sur chacune des faces de la bobine. Pour une épaisseur d'antenne de 50 microns, on a donc une surépaisseur de 100 microns. On peut facilement jouer sur l'épaisseur de la bobine pour compenser cette surépaisseur et maintenir l'épaisseur totale de la carte à l'intérieur des valeurs standard.

Dans l'exemple de la figure 1a, l'antenne 3 est en diagonale. Elle est droite et, comme sa largeur est nettement inférieure au diamètre intérieur de la bobine 1, elle peut facilement être glissée à l'intérieur. Elle est donc réalisée d'une seule pièce et la zone C est un simple pliage qui permet de compenser la différence de hauteur entre les parties A et B.

En l'absence d'antenne, les flux magnétiques parallèles à la surface de la carte à puce ne traversent pas la bobine 1 et ne génèrent donc aucune tension à ses bornes. Comme décrit dans le document WO 98/52 141, le fait d'incorporer l'antenne 3 à la carte permet de capter ces flux magnétiques parallèles à la surface de la carte, plus particulièrement ceux qui sont dans l'axe de l'antenne. Ces flux vont passer de la zone A, soit de la face supérieure de la bobine 1, vers la zone B, soit vers la face inférieure de celle-ci, ou inversement, en traversant le centre de la bobine 1 dans la zone C. Cela permet de générer aux bornes de la bobine 1 la tension nécessaire au bon fonctionnement du circuit électronique 2.

Dans le brevet suisse susmentionné, l'antenne ne capte pratiquement pas les flux perpendiculaires à la surface de la carte à puce, et son usage est clairement associé à des lecteurs qui génèrent des lignes de flux parallèles à la cette surface. Avec une telle stucture, l'antenne permet essentiellement de concentrer le flux au centre de la carte, dans une bobine de petit diamètre, mais ne résout aucunement le problème des positions mortes.

La présente invention représente donc un perfectionnement important, principalement pour les applications "main libre", dans la mesure où elle permet de résoudre en grande partie ce problème de positions mortes. En associant à l'antenne 3 une bobine 1 classique de grand diamètre, comme représenté à la figure 1, les flux perpendiculaires à la surface de la carte à puce traversent directement le centre de la bobine 1 sans passer par l'antenne 3. A diamètre équivalent, on retrouve des caractéristiques équivalentes à celles d'une carte classique sans antenne. Ainsi, en combinant ces deux systèmes, antenne plus bobine de grand diamètre, on arrive à faire traverser la bobine aussi bien par les flux parallèles à la surface de la carte, par l'intermédiaire de l'antenne 3, que par les flux perpendiculaires à cette surface, directement à travers la bobine 1 de grand diamètre, ce qui va tout à fait dans le but visé d'éliminer les positions mortes, comme il apparaîtra mieux plus loin.

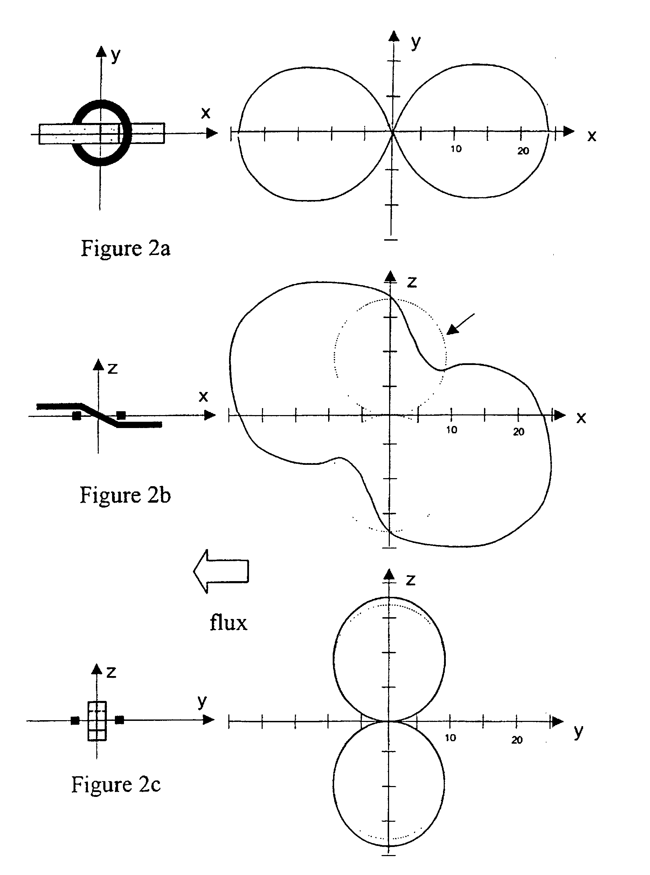

La figure 1b représente une carte dans laquelle l'antenne 3 n'est plus en diagonale, mais alignée selon l'axe longitidinal de la carte à puce. On arrive, en effet, à modifier la réponse de la carte dans les différentes positions en changeant la configuration de l'antenne, ce qui permet d'optimaliser son fonctionnement en fonction des applications. Dans le cas de la figure 1b, l'antenne est toujours d'une seule pièce. Les caractéristiques de cette carte sont données à la figure 2.

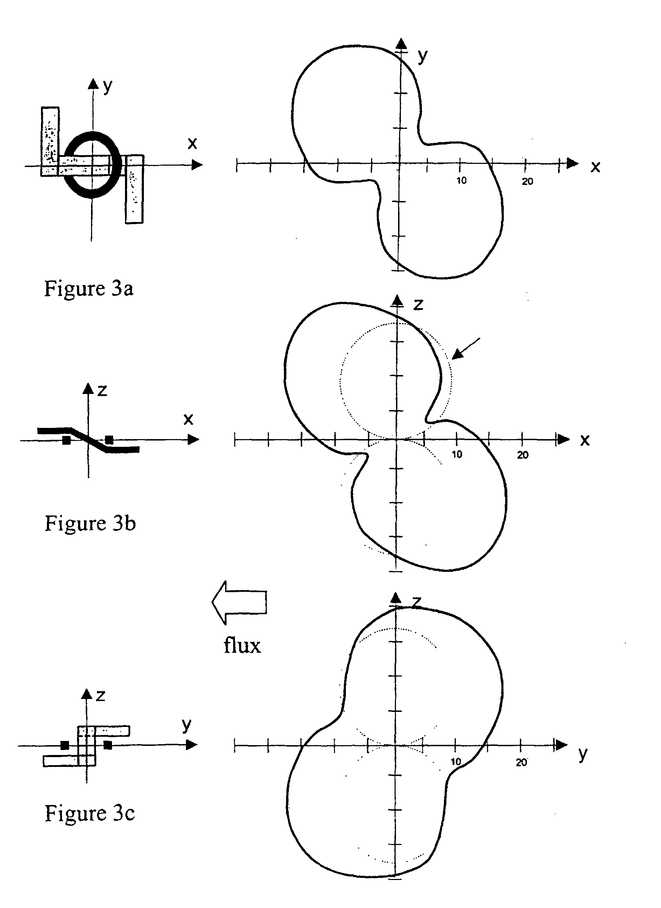

A la figure 1c, au contraire, l'antenne 3 a une forme en Z, plus complexe, permettant de modifier les caractéristiques, comme représenté à la figure 3. Il peut être plus facile de la réaliser en deux parties. La partie supérieure A et la partie inférieure B se recoupent dans la zone C et sont pliées de manière à se superposer. Elles peuvent être assemblées par rivetage, collage ou toute autre méthode. On peut également, dans certains cas, avoir une antenne en deux parties et laisser entre elles un entrefer, sans que cela nuise au bon fonctionnement du système.

La tension induite à 125 kHz aux bornes de la bobine captrice 1 avec la configuration d'antenne de la figure 1b est représentée à la figure 2. L'axe X est dans le sens de la longueur de la carte, l'axe Y dans le sens de la largeur et l'axe Z perpendiculaire aux deux premiers, soit perpendiculaire à la surface de la carte. La tension est représentée vectoriellement en fonction de l'angle de rotation de l'antenne en admettant que celle-ci tourne selon un axe perpendiculaire au plan du dessin. Le trait fin représente la tension obtenue sans antenne, et le trait plus épais la tension obtenue avec l'antenne en place. La position de départ, correspondant à l'angle de rotation 0, est représentée à gauche. Les mesures sont faites à l'intérieur d'une bobine de Helmoltz alimentée à courant constant de manière à avoir un flux uniforme. La direction de ce flux est horizontale, comme l'indique la flèche.

A la figure 2a, les axes X et Y sont dans le plan du dessin et la carte tourne selon l'axe Z. La bobine est parallèle aux lignes de flux sur l'ensemble des 360 degrés de rotation. Elle n'est donc pas traversée par ces lignes de flux si bien que , sans antenne (courbe en pointillés), la tension induite est pratiquement nulle quel que soit l'angle.

Avec l'antenne, le flux passant par l'antenne à l'intérieur de la bobine est maximum à 0 et 180 degrés lorsque l'antenne est parallèle aux lignes de flux. Il est nul à 90 et 270 degrés lorsque l'antenne est perpendiculaire aux lignes de flux. On a donc une répartition sinusoïdale de la tension induite en fonction de l'angle. Cette répartition avec antenne, même si elle présente deux passages par 0, est de toute manière beaucoup plus favorable que la répartition sans antenne.

A la figure 2b, les axes Z et X sont dans le plan du dessin et la carte tourne selon l'axe Y. La bobine est parallèle aux lignes de flux à 0 et 180 degrés. Elle est perpendiculaire aux lignes de flux à 90 et 270 degrés. Sans antenne (courbe en pointillés), le flux est nul dans le premier cas et maximum dans le second. On a donc une répartition sinusoïdale de la tension induite en fonction de l'angle, avec des passages à 0 et 180 degrés, et des maximum à 90 et 270 degrés.

Avec l'antenne, le flux passant par l'antenne à l'intérieur de la bobine est maximum à 0 et 180 degrés lorsque l'antenne est parallèle aux lignes de flux. Il est nul à 90 et 270 degrés lorsque l'antenne est perpendiculaire aux lignes de flux. On peut alors constater un phénomène très intéressant. A 0 et 180 degrés, la totalité du flux traversant la bobine est amené par l'antenne et on a la tension induite correspondante. A 90 et 270 degrés, l'antenne est inopérante, mais on a la tension due au passage direct du flux à travers la bobine, correspondant au maximum de tension obtenu lorsqu'il n'y a pas d'antenne. Dans les positions intermédiaires, par exemple à 60 et 240 degrés, les flux passant dans la bobine directement, d'une part, et par l'antenne, d'autre part, se contrarient, si bien que l'on a une certaine diminution de la tension induite, sans qu'il y ait pourtant de passage à 0. Par contre, à 140 et 330 degrés, ces flux s'additionnent, si bien que c'est là que l'on trouve le maximum de tension induite.

A la figure 2c, les axes Z et Y sont dans le plan du dessin et la carte tourne selon l'axe X. La bobine est parallèle aux lignes de flux à 0 et 180 degrés. Elle est perpendiculaire aux lignes de flux à 90 et 270 degrés. Sans antenne (courbe en pointillés), le flux est nul dans le premier cas et maximum dans le second. On a donc une répartition sinusoïdale de la tension induite en fonction de l'angle, avec des passages à 0 et 180 degrés, et des maximum à 90 et 270 degrés.

Dans ce cas là, l'antenne est pratiquement inopérante dans tous les angles, si bien que l'on retrouve pratiquement la même répartition de la tension induite que sans antenne. Dans ce cas, c'est donc l'utilisation d'une relativement grande bobine qui est favorable, alors que l'antenne n'apporte rien. On notera que, sans antenne, la tension aux bornes de la bobine est proportionnelle au carré de son diamètre. Avec une petite bobine, on aurait une tension négligeable quel que soit l'angle. Pour avoir des performances similaires de la carte à puce dans les principales directions, il est donc nécessaire de dimensionner la bobine captrice par rapport à l'antenne de manière que la tension induite à ses bornes soit du même ordre de grandeur, que l'antenne soit perpendiculaire ou parrallèle aux lignes de flux.

On voit ainsi clairement qu'en combinant, selon la présente invention, une bobine relativement grande qui capte les lignes de flux perpendiculaires à la carte à puce non captées par l'antenne, alors que celle-ci capte les lignes de flux parallèles à la carte à puce que la bobine ne capte pas, on réalise cette condition et on réduit de manière considérable les positions mortes, ce que l'on ne peut obtenir ni avec une bobine seule, même de grand diamètre, ni avec une antenne associée à une petite bobine.

Sur la figure 3, on a représenté les mêmes courbes, mais avec une antenne en forme de Z . A la figure 3a, les axes X et Y sont dans le plan du dessin et la carte tourne selon l'axe Z. A la figure 3b, les axes Z et X sont dans le plan du dessin et la carte tourne selon l'axe Y. Enfin, à la figure 3c, les axes Z et Y sont dans le plan du dessin et la carte tourne selon l'axe X. Cette configuration d'antenne en Z est particulièrement intéressante dans la mesure où elle ne présente pratiquement pas de position morte quand on tourne selon l'axe Z (figure 3a). Quand on tourne selon les axes Y ou X (figures 3b et 3c), le flux dans l'antenne est nul dans certaines positions, mais cela est compensé par le flux qui traverse directement la bobine sans passer par l'antenne. On voit que l'on a donc une répartition très homogène de la tension induite dans les trois cas de figure, pratiquement sans passage à 0.

Il est donc possible d'adapter les caractéristiques de la carte à puce, et plus particulièrement son comportement dans les différentes positions qu'elle pourrait avoir par rapport aux lignes de flux générées par le système de lecture en adaptant la forme de l'antenne travaillant en association avec une bobine captrice de grand diamètre.

Il existe, bien sûr, d'autres configurations possible de la carte à puce selon la présente invention, mais leur description n'apporterait pas d'éléments nouveaux pour la description de celle-ci.

## Revendications

1. Carte à puce sans contact, de type RF, comportant une bobine captrice (1), un circuit électronique (2) relié à ladite bobine et une antenne (3) en matériau de perméabilité magnétique élevée comportent une première partie (A) située sensiblement dans le plan de la face supérieure de la bobine et une deuxième partie (B) située sensiblement dans le plan de la face inférieure de la bobine, **caractérisée par le fait que** ladite antenne (3) comporte une partie de liaison (C) entre la première et la deuxième partie située au centre de la bobine, cette dernière étant dimensionnée par rapport à l'antenne (3) de manière que les tensions induites à ses bornes soient du même ordre de grandeur, que l'antenne soit parallèle ou perpendiculaire aux lignes de flux générées par un lecteur.

2. Carte à puce selon la revendication 1, **caractérisée par le fait que** l'antenne (3) est réalisée dans une feuille ou ruban mince de métal à haute perméabilité magnétique.

3. Carte à puce selon la revendication 1, **caractérisée par le fait que** l'antenne (3) est réalisée dans un métal à forte teneur en nickel.

4. Carte à puce selon la revendication 1, **caractérisée par le fait que** rantenne (3) est réalisée d'une seule pièce, la partie de liaison (C) consistant en un pliage traversant le centre de la bobine (1).

5. Carte à puce selon la revendication 1, **caractérisée par le fait que** l'antenne (3) est réalisée en deux pièces, les première (A) et deuxième (B) parties (B) se recouvrant au centre de la bobine (1) dans la partie de liaison (C).

6. Carte à puce selon la revendication 1, **caractérisée par le fait que** l'antenne (3) est droite.

7. Carte à puce selon la revendication 1, **caractérisée par le fait que** l'antenne (3) est placée en diagonale.

8. Carte à puce selon la revendication 1, **caractérisée par le fait que** l'antenne (3) est en forme de Z.

## Patentansprüche

1. Kontaktlose RF-Chipkarte mit einer Sensorspule (1), einem elektronischen Schaltkreis (2), der mit der besagten Spule (2) verbunden ist und einer Antenne (3) aus einem Material erhöhter magnetischer Durchlässigkeit, **dadurch gekennzeichnet, dass** die besagte Antenne (3) einen ersten Teil (A) enthält, der sich eindeutig auf Höhe der planen Fläche der Oberseite befindet sowie einen zweiten Teil (B), der sich eindeutig auf Höhe der planen Fläche der Unterseite der Spule befindet und einen Verbindungsbereich (C) zwischen dem ersten und zweiten Teil, der sich auf Höhe der Mitte der Spule befindet, wobei die Spule zur Antenne (3) in der Form abgemessen ist, dass die an ihre Pole induzierte Spannungen dieselbe Größe haben und, dass die Antenne parallel oder senkrecht zu den Stromlinien verläuft, die durch die Lesvorrichtung erzeugt werden.

2. Chipkarte nach Anspruch 1, **dadurch gekennzeichnet, dass** die Antenne (3) in einem feinen Metallblättchen oder -band ungesetzt ist, das über eine erhöhte magnetische Durchlässigkeit verfügt.

3. Chipkarte nach Anspruch 1, **dadurch gekennzeichnet, dass** die Antenne (3) in einem Metall umgesetzt ist, dass über einen hohen Nickelgehalt verfügt.

4. Chipkarte nach Anspruch 1, **dadurch gekennzeichnet, dass** die Antenne (3) aus einem Stück umgesetzt ist, wobei der Verbindungsbereich (C) so gefaltet ist, dass er die Mitte der besagten Spule (1) durchquert.

5. Chipkarte nach Anspruch 1, **dadurch gekennzeichnet, dass** die Antenne (3) aus zwei Teilen umgesetzt ist, wobei der erste (A) und zweite Teil (B) in der Mitte der Spule (1) im Verbindungsbereich (C) überlappen.

6. Chipkarte nach Anspruch 1, **dadurch gekennzeichnet, dass** die Antenne (3) gerade ist.

7. Chipkarte nach Anspruch 1, **dadurch gekennzeichnet, dass** die Antenne (3) in der Diagonalen befestigt ist.

8. Chipkarte nach Anspruch 1, **dadurch gekennzeichnet, dass** die Antenne (3) z-förmig ist.

## Claims

1. Contactless RF-type smart card, including a sensor coil (1), an electronic circuit (2) connected to said coil and an antenna (3) made of a material with high magnetic permeability, including a first part (A) located substantially in the plane of the upper coil surface and a second part (B) located substantially in the plane of the lower coil surface, **characterised in that** said antenna (3) includes a connecting part (C) between the first and second parts located at the centre of the coil, the latter being dimensioned relative to the antenna (3) such that the voltages induced across its terminals are of the same order of magnitude, whether the antenna is parallel or perpendicular to the lines of flux generated by a reader.

2. Smart card according to claim 1, **characterised in that** the antenna (3) is made in a thin sheet or strip of metal with high magnetic permeability.

3. Smart card according to claim 1, **characterised in that** the antenna (3) is made of a metal with a high nickel content.

4. Smart card according to claim 1, **characterised in that** the antenna (3) is made in a single piece, the connecting part (C) consisting of a fold passing through the centre of the coil (1).

5. Smart card according to claim 1, **characterised in that** the antenna (3) is made in two parts, the first (A) and the second (B) parts overlapping each other at the centre of the coil (1) in the connecting part (C).

6. Smart card according to claim 1, **characterised in that** the antenna (3) is straight.

7. Smart card according to claim 1, **characterised in that** the antenna (3) is placed diagonally.

8. Smart card according to claim 1, **characterised in that** the antenna (3) is Z-shaped.
